# EUROPEAN PATENT SPECIFICATION

(11) **EP 3 411 798 B1**
(45) Date of publication and mention of the grant of the patent: **04.12.2019**
(21) Application number: 17703402.2
(22) Date of filing: 03.02.2017
(51) Int. Cl.: G06F 12/0804, G06F 12/0864, G06F 12/0895, G06F 12/0897

(54) **CACHE AND METHOD**
ZWISCHENSPEICHER UND VERFAHREN
ANTÉMÉMOIRE ET PROCÉDÉ

(30) Priority: 03.02.2016 GB 201601942
(43) Date of publication of application: 12.12.2018
(73) Proprietor: Swarm64 AS, 0258 Oslo (NO)
(72) Inventor: MARTINEZ DE LA TORRE, Alfonso, 12109 Berlin (DE); LILAND, Eivind, 12109 Berlin (DE); RICHTER, Thomas, 12109 Berlin (DE)
(74) Representative: Script IP Limited
(86) International application number: PCT/EP2017/052383
(87) International publication number: WO 2017/134224

(56) References cited:
- EP-A2- 0 319 647
- US-A- 5 668 968
- US-A1- 2014 289 468

## Description

### FIELD OF THE INVENTION

The present invention relates to a cache, a method and a computer program product.

### BACKGROUND

Caches are known. A cache is typically used to provide a local store of data values for use by at least one processor core; such data values may be instructions as well as data. It is known to provide a cache in order to improve the performance of the processor core when executing sequences of instructions, since the cache can provide a local copy of data values such that these data values are available to the processor core when required, rather than having to access a slower memory.

In order to maintain fast access times, minimize space and reduce power consumption, the size of the cache is typically limited. Given the cache's finite size, it is apparent that there will come a time when the cache becomes full and data values within the cache will need to be overwritten.

When the cache provided is a so-called "n"-way set associative cache, a data value may be written at an appropriate index in any one of the "n"-ways. Allocation algorithms exist that determine which of the "n"-ways should be allocated to store the data value. US 2014/289468 A1 discloses an On-chip caching of address tag cache and off-chip primary cache. Responsive to a miss in both the address tag and the primary cache, inferring an address tag cache replacement. US 5 668 968 A discloses a two-level cache memory, with a virtually indexed L₁ on-chip cache and physically indexed L2 off-chip cache, where the L2 cache controller keeps way information for the L1 cache for resolving synonym problems without having to store the tag for the L1 cache. Although caches can help improve the performance of the processor core, there are certain scenarios where it is difficult to provide a cache arrangement which provides for such performance improvements. Accordingly, it is desired to provide an improved arrangement of cache.

### SUMMARY OF THE INVENTION

According to a first aspect, there is provided a level-'n' cache method, as claimed in claim 1.

The first aspect recognises that a situation can arise whereby the data blocks to be stored by the cache can be very large. If the size of the cache is maintained, then the number of data blocks that can be cached reduces to levels where the rate of cache misses increases to unacceptable levels. In some circumstances, the size of the data blocks (and even the storage size required for the addresses) can be so large that it is not even possible to store those data blocks (or addresses) within a traditional architecture cache. Although it is possible to store the data blocks within a larger memory, that larger memory will typically need to be more remote from the processor core and so accessing that memory will be slower, which again can lead to performance degradation.

Accordingly, a method is provided. The method may be for a level-'n'cache. That is to say, the method may be performed by one of the cache levels within a memory system. The method may comprise the step of interrogating an address cache provided within the level-'n' cache, the address cache of the level-'n' cache being arranged to store address portions, such as a component or part of a complete address. The address cache may be arranged to store the address portions for a sub-set or a portion of the complete number of data blocks stored in a main cache of the level-'n' cache. The interrogation may occur in response to or on receipt of a data access request, or when a data access request is received. The data access request may identify an address of a data block to be accessed within the level-'n' cache. The interrogation may determine whether a cache hit occurs within the address cache for that address. That is to say that the interrogation may determine whether the address cache has a matching entry for that address. In this way, providing the address cache which is separate from the main cache, with the address cache storing address portions relating to data blocks stored in the main cache, the amount of data required to be stored in the address cache is reduced, and decouples the size of the address cache from that of the main cache which enables the address cache to be sized independent of the size of the data blocks stored in the main cache. This provides for a cache of addresses which can be significantly smaller, faster and easily locatable with other components of a data processing apparatus, whilst allowing the data to be stored elsewhere in the main cache which can be larger, slower and more remotely-located from the other components of the data processing apparatus.

In one embodiment, the address cache is on-chip and the main cache is off-chip. Accordingly, because the address cache is small, this can be on-chip with, for example, lower-level caches and any processor cores or other host devices. Conversely, the main cache can be located off-chip, in larger memory which is able to store larger data blocks than would otherwise be possible had the data blocks needed to be stored in memory on-chip.

In one embodiment, the data blocks comprise a memory page. Accordingly, the data blocks may be sized to match that of a memory page within an external memory unit. For example, the data blocks may be greater than around 64 bytes, preferably around 4 kB and up to 32 kB, or larger. Hence, it can be seen that the data blocks may be of many orders of magnitude than would typically be stored within cache lines of existing caches.

In one embodiment, the method comprises, when a cache hit occurs within the address cache, accessing the data block within the main cache using an indication from the address cache of a set and a way within the main cache where the data block can be accessed. Accordingly, when the data access request results in a cache hit within the address cache, meaning that a portion of the address of the data access request matches a portion of an address stored within the address cache, the data block may be directly accessed within the main cache using an indication also stored within the address cache for that address portion. That indication stored within the address cache for that address portion may identify a location within the main cache where the data block can be accessed. Typically, that indication will identify a set and way within the main cache from which the location of the data block can be derived. It will be appreciated that even though the access of the data block occurs within the main cache (which is likely to be slower), when the address cache contains an indication of the location of that data block within the main cache, an initial lookup within the main cache is avoided (which may also take a relatively long time) and instead that lookup is performed on the faster address cache, which significantly improves performance.

In one embodiment, the method comprises, when a cache miss occurs within the address cache, interrogating the main cache to determine whether a cache hit occurs within the main cache for the address. Accordingly, when a cache miss occurs within the address cache, meaning that an address portion of the address associated with the data access request does not match any of the address portions stored within the address cache, the main cache may then be interrogated. That interrogation may determine whether the address portion associated with the data access request matches any address portions stored within the main cache. Accordingly, when the location of the data block cannot be derived directly from the address cache, the access request my then be passed to the main cache to see whether the data block is in fact stored, but that its address portion is not currently cached within the address cache. It will be appreciated that this situation is likely to arise since the address cache will only store a subset of address portions relating to all of the entries within the main cache.

In one embodiment, the method comprises, when a cache hit occurs within the main cache, updating an entry in the address cache to store an address portion associated with the data access request together with an indication of a set and a way within the main cache where the data block can be accessed. Accordingly, when a cache hit occurs within the main cache, meaning that the address portion associated with the data access matches an address portion within the main cache, an entry in the address cache may then be updated. The entry may be updated to store the address portion associated with the data access request. The entry may also be updated to include an indication of the set and way within the main cache so that all the information is available for that data block to be directly accessed from the main cache using the information stored in the address cache, without needing to get any further information from the slower main cache. This means that should that address need to be accessed again, all the information is available from the address cache without needing to access the slower main cache again.

In one embodiment, entries within the address cache are grouped into groups of entries, each group of entries being allocatable to a corresponding group of sets, each entry within each group of entries being allocatable for any entry in any way within that group of sets and the updating comprises replacing an entry in the address cache within a group of entries for a set associated with the data access request with the address portion together with the indication of the set and the way within the main cache. Accordingly, entries within the address cache may be grouped together. Each group may map on to a number of sets within the main cache. For example, if there are two groups within the address cache, then one group may map onto odd sets within the main cache, whereas the other group may map onto even sets within the main cache. This means that a number of different sets within the main cache may share a group of entries within the address cache. When the address cache needs to be updated, the group of entries within the address cache for the set associated with the address of the data block to be accessed may be selected and one of those entries within the group may be updated. For example, using the example mentioned above, should the data access requests be associated with a data block in set four, then the second group of entries may be selected and one of the entries within that group may be selected to be updated. The selected entry may be updated to store the address portion for the data access request together with an indication of which set, from all the even sets, the data block is associated with and which way within the main cache stores that data block. This enables the data block to be accessed within the main cache using just the information stored in the address cache.

In one embodiment, the replacing comprises replacing a least recently used entry within the group of entries. Although the least recently used entry is likely to be the best candidate to be replaced, in other embodiments other selection algorithms may be used.

In one embodiment, the method comprises, when a cache hit occurs within the address cache, setting a pending indicator for that group of entries containing the hit entry until the data access request has been resolved. Accordingly, when a cache hit occurs within the address cache, meaning that the address portion associated with the data access request matches an address portion stored within the address cache, a pending indicator may be set. The pending indicator may be set for the group of entries within which the cache hit occurred. The pending indicator may remain set until the access request has been resolved or completed. Setting the pending indicator provides an indication that data within the group of sets is being accessed and so may be stale.

In one embodiment, the method comprises deferring any access requests made to a group when the pending bit is set for that group. Accordingly, any subsequent access requests made to the group of sets can be deferred until the pending access request has been resolved. This means that any potentially stale data will have been updated or removed.

In one embodiment, the method comprises disregarding the pending bit when the data access request is from a high-priority owner. Accordingly, those access requests made from high-priority owners of the data are allowed to be performed since the high-priority owner is most likely to have control over that data.

In one embodiment, the method comprises, when a cache miss occurs within the main cache, obtaining the data block from a higher-level memory. Accordingly, when a cache miss occurs within the main cache, meaning that the address portion of the access request fails to match any address portion within the main cache, the data block may then be obtained from a higher level memory for caching by the level-'n' cache.

In one embodiment, the method comprises, when the data block has been obtained, replacing an entry in the main cache within a group of entries for a set associated with the data access request, the entry being indicated by a clean index for that group of entries, storing the address portion within the entry and storing the data block at a location associated with that entry in the main cache. Accordingly, when the data block has been obtained from the higher-level memory, an entry within the main cache may be replaced. The entry to be replaced may be selected from those allocated for the set associated with the access request. The entry selected may be that one which is indicated by a clean index for that group of entries. The address portion may be stored within the entry indicated by the clean index within that group and the data block may be stored at a location associated with that entry within the main cache. In embodiments, the clean index indicates that the associated entry is not dirty, meaning that the entry matches that stored by any higher-level memory since no change has happened to that entry or any changes have been written-back or written-through. This enables the entry indicated by the clean index to be replaced without delay.

In one embodiment, the method comprises changing the clean index to point to a different entry within the group of entries and, when the different entry is marked as dirty, performing a write-back for that entry. Accordingly, when an entry in the main cache is replaced, the clean index may be changed to point to a different entry within the group of entries that was just replaced. Should the different entry be indicated as being dirty (meaning that the value of the data block has changed but that this change has not yet been written-back to the higher-level memory), then a write-back for that entry may be performed to the higher-level memory. This prepares the entry for a future replacement when such replacement is required and enables the replacement to occur more quickly than if a write-back had to occur at the time of replacement.

In one embodiment, the different entry is selected on a round-robin basis. Although a round-robin selection is adequate in many circumstances, it will be appreciated that other selection algorithms may be used.

In one embodiment, the method comprises, when the write-back has completed, marking the different entry as clean in the main cache and setting an is_clean indication associated with the entry within the address cache storing the address portion of the data access request. Accordingly, when the write-back of the data value to the higher level memory has occurred, the different entry may then be indicated to be clean within the main cache and an indication may be set within the address cache that the entry is now clean. This means that both the main cache and the address cache contain indications that the data block associated with those entries is not dirty and so can be replaced without any delay.

In one embodiment, the method comprises when a cache hit occurs within the address cache, the data access request is a write request and the is_clean indication associated with the entry within the address cache storing the address portion of the data access request is set, reporting a cache miss within the address cache, changing the clean index in the main cache to point to a different entry within the group of entries and when the different entry is marked as dirty, performing a write-back for that entry. Accordingly, when a cache hit occurs within the address cache, meaning that the address portion of the data access matches an address portion within the address cache, and when that data access is a write request, and when the is-clean indication associated with the entry on which the cache hit occurred is set, rather than a cache hit being reported, instead a cache miss within the address cache may be reported. When this occurs, the clean index in the main cache may be changed or altered to point to a different entry within that set. Should that entry be marked as dirty then a write-back for that entry may occur. This helps to prevent a data block which is about to be written to from being selected for replacement within the main cache and instead a different entry within the main cache may be selected as the candidate to next be replaced.

In one embodiment, the method comprises, when the write-back has completed, marking the different entry as clean in the main cache and setting an is_clean indication associated with an entry within the address cache storing an address portion for that entry. Accordingly, when the write-back to the higher level memory has been completed, the different entry in the main cache maybe marked as clean and the corresponding is-clean indication in the address cache may be set to indicate that this data block is also clean and so can be replaced without delay, should that be required.

In one embodiment, the method comprises reporting a cache hit within the main cache and setting an is_clean indication associated with the entry within the address cache storing the address portion of the data access request. Accordingly, a cache hit within the main cache may occur and the entry within the address cache may be marked as clean. It will be appreciated that in these circumstances, there is no need to provide the address portion or way or set indications to the address cache since that information is already stored within the address cache despite the address cache reporting a cache miss.

Each entry in the address cache and the main cache has an owner indication which indicates an owner for that entry and comprising setting the owner indication when the data access request is an exclusive read. Accordingly, an owner indication may be provided for every entry within the address cache and within the main cache. These owner indications may be set by indicating the owner when an exclusive data access request is made to that address. As will be explained in more detail below, when an owner indication is set, subsequent data access requests to that address may be impaired in certain circumstances.

In one embodiment, the method comprises, when every entry within a group of entries within the address cache has their owner indication set, selecting one of the entries to be invalidated. Accordingly, should all of the entries within a group within the address cache have an owner indication set then this potentially prevents any of those entries being replaced and so at least one of the entries may be selected to be invalidated. It will be appreciated that such invalidation may require the owner associated with an entry to resolve any outstanding access requests.

In one embodiment, the selecting comprises selecting a least-recently-used entry.

In one embodiment, the method comprises, when a cache hit occurs within the address cache for an entry where the owner indication is set, deferring the access request for access requests from other than the owner. Deferring or postponing the access request until the indication is no longer set helps to prevent any stale data from being used.

According to a second aspect, there is provided a level-'n' cache, as claimed in claim 14.

In one embodiment, the address cache is on-chip and the main cache is off-chip.

In one embodiment, the data blocks comprise a memory page. For example, the data blocks may be greater than around 64 bytes, preferably around 4 kB and up to 32 kB, or larger. Hence, it can be seen that the data blocks may be of many orders of magnitude than would typically be stored within cache lines of existing caches.

In one embodiment, the control logic is operable, when a cache hit occurs within the address cache, to access the data block within the main cache using an indication from the address cache of a set and a way within the main cache where the data block can be accessed.

In one embodiment, the control logic is operable, when a cache miss occurs within the address cache, to interrogate the main cache to determine whether a cache hit occurs within the main cache for the address.

In one embodiment, the control logic is operable, when a cache hit occurs within the main cache, to update an entry in the address cache to store an address portion associated with the data access request together with an indication of a set and a way within the main cache where the data block can be accessed.

In one embodiment, entries within the address cache are grouped into groups of entries, each group of entries being allocatable to a corresponding group of sets, each entry within each group of entries being allocatable for any entry in any way within that group of sets and the control logic is operable to replace an entry in the address cache within a group of entries for a set associated with the data access request with the address portion together with the indication of the set and the way within the main cache.

In one embodiment, the control logic is operable to replace a least recently used entry within the group of entries.

In one embodiment, the control logic is operable, when a cache hit occurs within the address cache, to set a pending indicator for that group of entries containing the hit entry until the data access request has been resolved.

In one embodiment, the control logic is operable to defer any access requests made to a group when the pending bit is set for that group.

In one embodiment, the control logic is operable to disregard the pending bit when the data access request is from a high-priority owner.

In one embodiment, the control logic is operable, when a cache miss occurs within the main cache, to obtain the data block from a higher-level memory.

In one embodiment, the control logic is operable, when the data block has been obtained, to replace an entry in the main cache within a group of entries for a set associated with the data access request, the entry being indicated by a clean index for that group of entries, by storing the address portion within the entry and by storing the data block at a location associated with that entry in the main cache.

In one embodiment, the control logic is operable to change the clean index to point to a different entry within the group of entries and, when the different entry is marked as dirty, to perform a write-back for that entry.

In one embodiment, the control logic is operable to select the different entry on a round-robin basis.

In one embodiment, the control logic is operable, when the write-back has completed, to mark the different entry as clean in the main cache and to set an is_clean indication associated with the entry within the address cache storing the address portion of the data access request.

In one embodiment, the control logic is operable, when a cache hit occurs within the address cache, the data access request is a write request and the is_clean indication associated with the entry within the address cache storing the address portion of the data access request is set, to report a cache miss within the address cache, to change the clean index in the main cache to point to a different entry within the group of entries and, when the different entry is marked as dirty, to perform a write-back for that entry.

In one embodiment, the control logic is operable, when the write-back has completed, to mark the different entry as clean in the main cache and to set an is_clean indication associated with an entry within the address cache storing an address portion for that entry.

In one embodiment, the control logic is operable to report a cache hit within the main cache and to set an is_clean indication associated with the entry within the address cache storing the address portion of the data access request.

Each entry in the address cache and the main cache has an owner indication which indicates an owner for that entry and the control logic is operable to set the owner indication when the data access request is an exclusive read.

In one embodiment, the control logic is operable, when every entry within a group of entries within the address cache has their owner indication set, to select one of the entries to be invalidated.

In one embodiment, the control logic is operable to select a least-recently-used entry.

In one embodiment, the control logic is operable, when a cache hit occurs within the address cache for an entry where the owner indication is set, to defer the access request for access requests from other than the owner.

According to a third aspect, there is provided a computer program product operable, when executed on a computer, to perform the method of the first aspect.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates a data processing apparatus, generally 10, according to one embodiment;
Figure 2 illustrates the arrangement of the entries within the level-'n' cache;
Figure 3 is a flowchart describing the main steps performed by the cache logic in relation to the on-chip tag RAM;
Figure 4 is a flowchart describing the main steps performed by the cache logic in relation to the off-chip portion; and
Figures 5 and 6 illustrate the pipeline processing of the cache logic.

### DESCRIPTION OF THE EMBODIMENTS

Before discussing embodiments in any more detail, first an overview will be provided. Embodiments provide an architectural arrangement of a level-'n' cache. The level-'n' cache utilizes both faster, smaller storage and slower, larger storage. The slower storage is used to store address information and data values. For example, the slower storage is partitioned into a tag RAM and a data RAM. The tag RAM stores address information related to the data values stored in the data RAM. The tag RAM and the data RAM can be either the same or different physical memory devices (or plurality of each). The data values stored in the data RAM are typically data blocks which represent memory pages, which are typically larger than could be stored in a traditional data RAM of a level-'n' cache. Likewise, tag RAM used to store the addresses is typically larger than a traditional tag RAM of a level-'n' cache. The faster storage stores address information relating to a subset of all the addresses information stored in the tag RAM of the slower storage. Typically, the slower storage is off-chip, whereas the faster storage is on-chip together with processor core(s) and associated control logic. Through this architectural arrangement, it is possible to utilize off-chip, slower storage which is able to store large amounts of data values and addresses but the performance impact of using such slower storage is reduced by having the on-chip, faster storage which stores address information relating to a sub-set of the data values stored in the slower, off-chip storage.

When a data access request is made, the on-chip tag RAM is interrogated and, if there is a cache hit, then the data values can be retrieved directly from the data RAM portion of the slower, off-chip storage. Typically, the on-chip tag RAM provides set and way information for a sub-set of the data values stored the data RAM. This increases the speed of data accesses compared to otherwise having to first check the slower, off-chip tag RAM to determine whether there is a hit on the address information (which could take many tens of cycles) and then retrieving the data value when a hit occurs on the address information (which may also take many tens of cycles). Instead, if the address information is in the faster, on-chip tag RAM, then the address lookup in the slower, off-chip tag RAM is avoided. In other words, the on-chip tag RAM provides a cache of the tags in the off-chip tag RAM.

### Architectural Arrangement

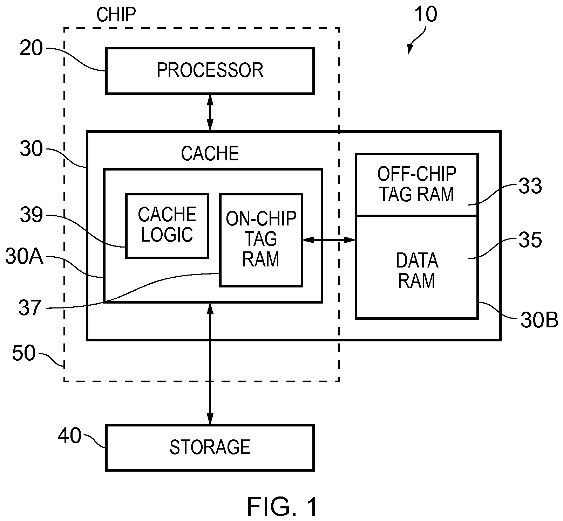

Figure 1 illustrates a data processing apparatus, generally 10, according to one embodiment. The data processing apparatus 10 comprises a processor core 20, a level-'n' cache 30 and storage 40. Other items of the data processing apparatus 10 have been omitted to improve clarity. The processor core 20 and an on-chip cache portion 30A of the level-'n' cache 30 are co-located on a chip 50. An off-chip cache portion 30B of the level-'n' cache 30 is located off-chip, as is the storage 40.

The processor core 20 is operable to execute a sequence of instructions that are applied to data values supplied to the processor core 20. Instructions and data to be processed by the processor core 20 are stored in the storage 40. Hereafter, the term 'data value' will be used to refer to both instructions and data.

### Level-'n' Cache

The level-'n' cache 30 is arranged to store data values so that they are subsequently readily accessible by the processor core 20 using a reduced number of access cycles when compared to an equivalent access to the storage 40. The level-'n'cache 30 stores a data value associated with a memory address until it is overwritten by a data value for a new memory address required by the processor core 20. The data value is stored in the level-'n' cache 30 using either physical or virtual memory addresses.

The on-chip cache portion 30A comprises an on-chip tag RAM 37. The off-chip cache portion 30B comprises both an off-chip tag RAM 33 and an off-chip data RAM 35. The off-chip data RAM 35 stores data values as data blocks or memory pages retrieved from the storage 40. The size of these memory pages is large (typically 4 kilobytes or greater), which is larger than could reasonably be stored in sufficient quantities in the on-chip cache portion 30A. Also the size of these addresses is typically larger than could reasonably be stored in sufficient quantities in the on-chip cache portion 30A. Accordingly, both address information and the associated data values (data blocks) are stored in the off-chip cache portion 30B, whereas address information (without the data values themselves) for some of the data blocks stored by the off-chip cache portion 30B are stored in the on-chip tag RAM 37. Having the address information cached on-chip improves access times to the data blocks stored in the off-chip data RAM 35. Although in this embodiment the off-chip tag RAM 33 and an off-chip data RAM 35 share the same physical RAM, they can be provided as separate RAMs and/ or multiple separate RAMs.

In this embodiment, the processor core 20 has a level 1 cache, the level-'n' cache 30 is a level 2 cache and the storage 40 is a level 3 memory. However, it will be appreciated that further caches may be provided between the processor 20 and the storage 40. Should a data value in the level-'n' cache 30 be altered, then it is usual to ensure that the altered data value is rewritten to the storage 40 either at the time the data value is altered (write-through) or when the data value in the level-'n' cache 30 is overwritten (write-back).

### Cache Entries

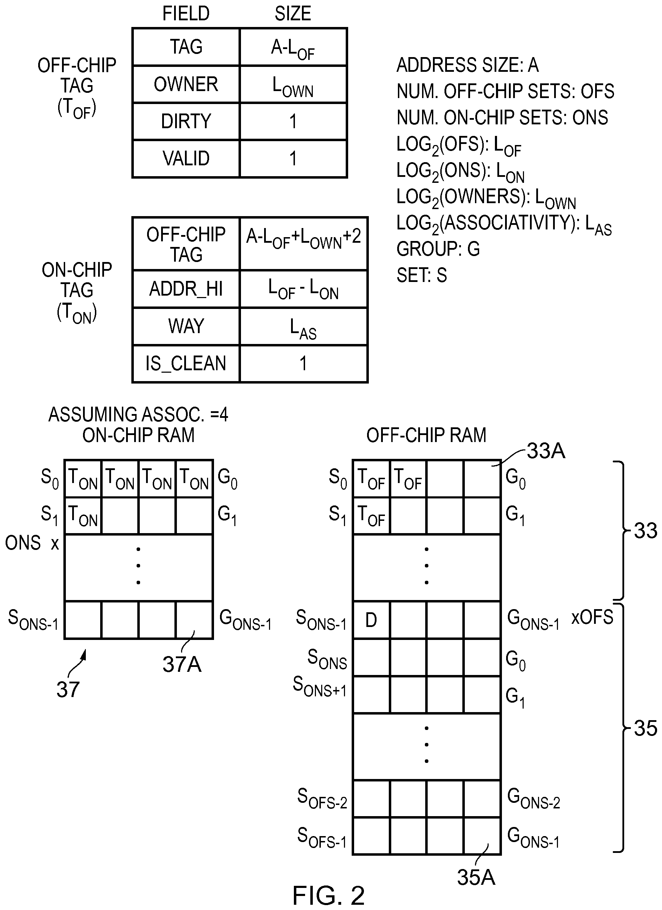

Figure 2 illustrates the arrangement of the entries within the level-'n' cache 30. A plurality of entries 33A are provided within the off-chip tag RAM 33, each of which stores an off-chip tag T_{OF}. A plurality of entries 35A are provided within the off-chip data RAM 35, each of which stores a data block D (such as a memory page). Each entry 33A within the off-chip tag RAM 33 corresponds with an entry 35A in the off-chip data RAM 35. That is to say, the address of a data block D stored in an entry 35A within the off-chip data RAM 35 can be identified from a corresponding entry 33A in the off-chip tag RAM 33.

The off-chip cache portion 30B is, in this example, a 4-way set associative cache. However, it will be appreciated that greater or fewer than four ways maybe utilized. Hence, when a data block is to be stored in an entry 35A in the off-chip data RAM 35, an off-chip set is identified based on the address of the data block. For example, it may be derived from the address of the data block that that data block must be stored in off-chip set S1. Within off-chip set S1, there are four entries 33A in the tag RAM 33A, one for each of the four ways, which may be utilized to store the off-chip tag T_{OF}. As will be explained in more detail below, one of these is selected and that entry is used to store the off-chip tag T_{OF} for that data block. Meanwhile, a corresponding entry 35A within the data RAM 35 stores the data block D itself.

As can be seen in Figure 2, the off-chip tag T_{OF} contains four fields: a tag field, an owner field, a dirty bit and a valid bit. The tag field has a size A-L_{OF}, where A is the address size and L_{OF} is Log 2(number of off-chip sets). The owner field has a size of L_{OWN}, where L_{OWN} is Log 2(number of possible owners of data blocks). The dirty bit has a size of 1 and the valid bit has a size of 1. The tag field in combination with the set uniquely identifies the address of each data block stored by the off-chip cache portion 30B. The owner identifies an owner of the data value. The dirty bit indicates whether the content of the data block D has been changed since it has been retrieved from the storage 40 (and so may need to be written back to the storage 40). Clearing the dirty bit will indicate that the corresponding data block D is clean, whilst setting the dirty bit will indicate that at least one of the data values within the data block is dirty and, hence, will need to be written back to the storage 40. The valid bit is used to indicate whether a data block D stored in the corresponding entry 35A is still considered to be valid or not. Setting the valid bit will indicate that the corresponding data block D is valid, whilst clearing the valid bit will indicate that at least one of the data values within the data block is no longer valid and, hence, can be freely overridden.

Each entry 37A within the on-chip tag RAM 37 provides address information for a subset of the data values stored in the off-chip cache portion 30B. That is to say that the on-chip tag RAM 37 caches address information for some of the data values stored in the off-chip data RAM 35. In particular, each on-chip tag T_{ON} contains an off-chip tag T_{OF}. The on-chip tag T_{ON} also contains an address high field, which indicates which set from the possible sets within that group the entry relates. The on-chip tag T_{ON} also contains a way field, which indicates which way in the off-chip data RAM 35 the data block for that address is stored. The on-chip tag T_{ON} also contains an is-clean indicator or index which indicates whether the corresponding data value stored in the data RAM 35 is dirty or not.

Each on-chip set within the on-chip tag RAM 37 is associated with a group of off-chip sets within the off-chip cache portion 30B. For example, if there is an association value of 4, then on-chip set S0 may contain entries from off-chip sets S0, S4, S8, S12, and so on. That is to say, each of those off-chip sets are grouped together and the off-chip tags for that group are stored in the associated set in the on-chip tag RAM 37. Hence, the address high field within the on-chip tag T_{ON} fully identifies the set within the group of off-chip sets storing the data value associated with that address within the data RAM 35. Given that the entry number within the on-chip group of entries does not indicate the way storing the data block in the data RAM 35 (because any entry from any off-chip set may be stored in any entry in the on-chip set), the way field indicates the way in the off-chip data RAM 35 storing the data block.

### Example Operation

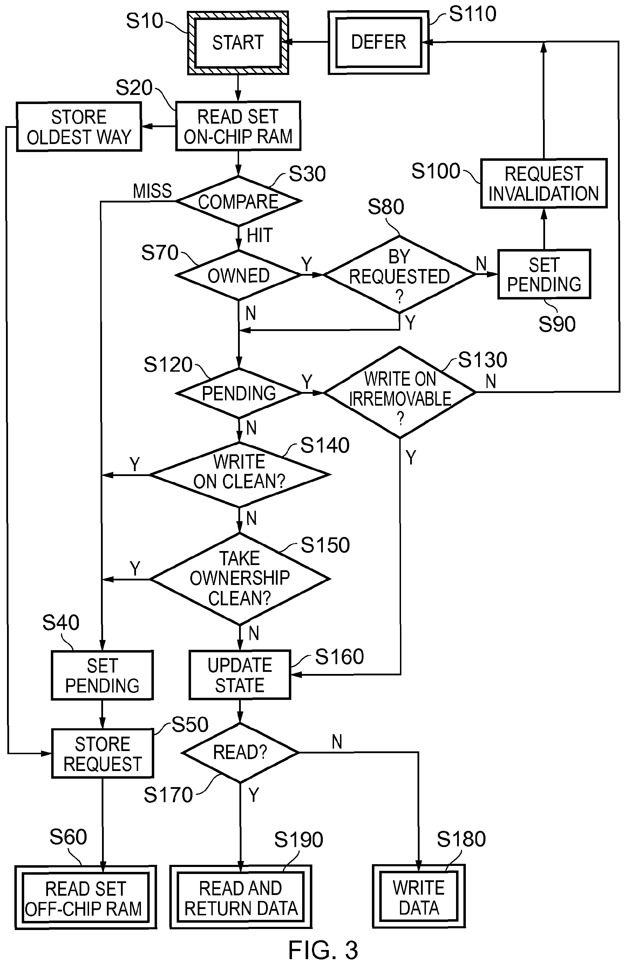

Figure 3 is a flowchart describing the main steps performed by the cache logic 39 in relation to the on-chip tag RAM 37. At step S10, a data access request is received. The data access request identifies the address of the data to be accessed and the type of access request.

At step S20, the set within the on-chip tag RAM 37 which would store that address is identified; for example, it maybe identified that on-chip set S1 would store that address and on-chip set S1 contains addresses for the group G1 of off-chip sets.

At step S30, the tag portion of the address is compared with the off-chip tag field stored in each of the entries for that set. In this example, the off-chip tag field of each of the four entries in the on-chip set S1 is compared with the tag portion of the address associated with the access request. If the tag portion does not match any of the off-chip tag fields of any of the entries stored in that set, then a cache miss occurs and processing proceeds to step S40 where a pending flag is set for that on-chip set. In this example, the pending bit for the on-chip set S1 would be set to indicate that a pending access is outstanding to that on-chip set. Thereafter, processing proceeds to step S50 where the access request is stored and so remains pending while processing proceeds to step S60 where the off-chip cache portion 30B is accessed to determine whether there is a cache hit for that data access request within the off-chip cache portion 30B.

Should the comparison at step S30 result in a cache hit (meaning that the tag portion of the access request matches an off-chip tag field in one of the on-chip tag entries) then processing proceeds to step S70.

At step S70, a determination is made of whether the owner field has been set for the entry in the on-chip tag RAM 37 that has hit. If the owner field has been set, then this means that an exclusive read request is pending for that data block, which indicates that the data may be changed shortly. Accordingly, if the owner field is set, then processing proceeds to step S80, where it is determined whether the access request is from the owner or not. If the access request is not from the owner, which is indicated by the owner field, then processing proceeds to step S90, where the pending bit is set for the on-chip set containing the entry which hit, and to step S100 where it is requested that the hit data block is invalidated in order that the owner of the data block performing the exclusive read resolves that exclusive read. Processing then proceeds to step S110 where the access request is deferred to enable the owner to resolve the outstanding exclusive read. If, at step S80, it is determined that the access request is from the owner, then processing proceeds to step S120.

When, at step S70, it is determined that the owner field is not set for the hit entry in the on-chip tag RAM 37, then processing proceeds to S120, where it is determined whether a pending bit has been set for that on-chip set (meaning that there is a pending data access request to that on-chip set and so a further data access request should normally be avoided until that pending data access request is resolved in case it is to the same data block). If the pending bit has been set, then processing proceeds to step S130 where it is determined whether the data access request is from a high-priority owner. If the data access request is not from a high-priority owner, then processing proceeds to step S110 where the access request is deferred. If the data access request is from a high-priority owner, then processing proceeds to step S160.

If, at step S120, it is determined that the pending bit is not set for that on-chip set, then processing proceeds to step S140 where it is determined whether a write is to be performed to an entry in the off-chip cache portion 30B which is identified by the is-clean indicator in the on-chip tag RAM 37 as being one which must remain clean. If a write is to be performed to an entry which is identified as being one which must remain clean (meaning that the write cannot currently take place because it would make that entry dirty), then processing proceeds to step S40 so that a change to the is-clean indicator can be made (by selecting a new entry to be the one which must remain clean) to enable the write to take place. If the access request is not a write to an entry in the off-chip cache portion 30B which is identified by the is-clean indicator in the on-chip tag RAM 37 as being one which must remain clean (meaning that the entry can be made dirty), then processing proceeds to step S150.

At step S150, a determination is made of whether the request is to take ownership of a clean entry in the off-chip cache portion 30B which is identified by the is-clean indicator in the on-chip tag RAM 37 as being one which must remain clean. If ownership is to be taken of an entry which is identified as being one which must remain clean, then processing proceeds to step S40 so that a change to the is-clean indicator can be made (by selecting a new entry to be the one which must remain clean) to enable the taking of ownership to occur. If ownership is not to be taken of an entry in the off-chip cache portion 30B which is identified by the is-clean indicator in the on-chip tag RAM 37 as being one which must remain clean (meaning that the entry can be made dirty), then processing proceeds to step S160.

At step S160, the state is updated and processing proceeds to step S170.

At step S170, it is determined whether or not the access request is a read. If the access request is not a read, then processing proceeds to step S180 where the data block is written to the off-chip data RAM 35. If the access request is a read, then processing proceeds to step S190 where the data block is read from the off-chip data RAM 35 and the read data block is returned to the processor 20.

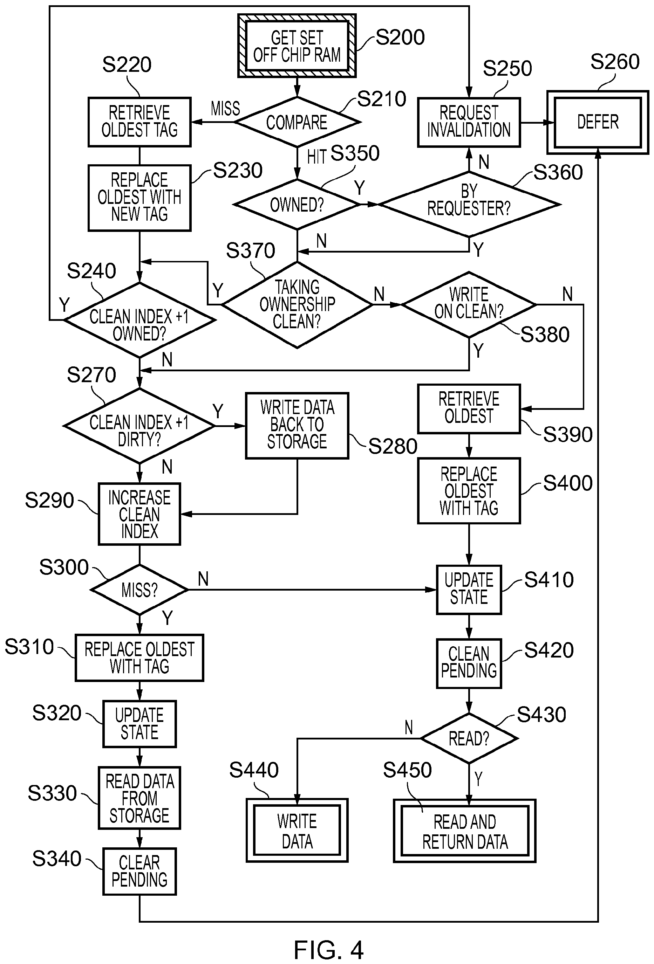

Figure 4 is a flowchart describing the main steps performed by the cache logic 39 in relation to the off-chip cache portion 30B. Following from step S60 from Figure 3, processing proceeds to step S200 in Figure 4.

At step S200, the set within the off-chip tag RAM 33A which would store that address is identified; for example, it maybe identified that off-chip set S1 would store that address.

At step S210, the tag portion of the address is compared with the tag field stored in each of the entries for that set. In this example, the tag field of each of the four entries in the off-chip set S1 is compared with the tag portion of the address associated with the access request. If the tag portion does not match any of the tag fields of any of the entries stored in that set, then a cache miss occurs and processing proceeds to step S220. At step S220, the oldest (least recently used) tag in that set is identified and, at step S230, the oldest entry within that set of the on-chip tag RAM 37 is replaced.

Thereafter, processing proceeds to step S240 where it is determined whether the entry which follows (on a round-robin basis) the entry currently pointed to by the clean index is owned or not. If it is owned, then processing proceeds to step S250 where an invalidation request for that entry is generated and to step S260 where the access request is deferred.

If it is determined at step S240 that the entry is not owned, then processing proceeds to step S270 where it is determined whether that entry is dirty or not. If it is determined that the entry is dirty then, at step S280, the dirty data is written back to the storage and, once that has completed, the entry can be marked as clean and processing proceeds to step S290 where the clean index is incremented to point to that now clean entry. Processing then proceeds to step S300 where it is determined whether a cache miss for that address occurs or not. This extra step is taken because an effective cache miss can be generated even though a cache hit has occurred. Should a cache miss have occurred, then processing proceeds to step S310 where the oldest tag in the on-chip RAM is replaced, if that has not already happened, together with the entry in the off-chip RAM pointed to by the clean index. At step S320, the changes are fixed when the state is updated in the on-chip and off-chip RAMs. At step S330, the data is read from storage and written into the appropriate off-chip data RAM entry. At step S340, the pending bit is cleared and processing proceeds to step S260.

At step S210, if a cache hit occurs, then processing proceeds to step S350 where it is determined whether the hit entry has its owner field set. If the owner field is set, then processing proceeds to step S360 where it is determined whether the data access request is from that owner. If the data access request is not from the owner, then processing proceeds to step S250. If the data access request is from the owner, then processing proceeds to step S370.

At step S350, a determination is made of whether the request is to take ownership of a clean entry in the off-chip cache portion 30B which is identified by the is-clean indicator in the on-chip tag RAM 37 as being one which must remain clean. If ownership is to be taken of an entry which is identified as being one which must remain clean, then processing proceeds to step S240 so that a change to the is-clean indicator can be made (by selecting a new entry to be the one which must remain clean) to enable the taking of ownership to occur. If ownership is not to be taken of an entry in the off-chip cache portion 30B which is identified by the is-clean indicator in the on-chip tag RAM 37 as being one which must remain clean (meaning that the entry can be made dirty), then processing proceeds to step S380.

At step S380 it is determined whether a write is to be performed to a clean entry in the off-chip cache portion 30B which is identified by the is-clean indicator in the on-chip tag RAM 37 as being one which must remain clean. If a write is to be performed to an entry which is identified as being one which must remain clean (meaning that the write cannot currently take place because it would make that entry dirty), then processing proceeds to step S270 so that a change to the is-clean indicator can be made (by selecting a new entry to be the one which must remain clean) to enable the write to take place. If the access request is not a write to an entry in the off-chip cache portion 30B which is identified by the is-clean indicator in the on-chip tag RAM 37 as being one which must remain clean (meaning that the entry can be made dirty), then processing proceeds to step S390.

At step S390, the oldest tag (least recently used) in the on-chip RAM 37 is determined and, at step S400 the oldest tag in the on-chip RAM 37 is replaced. At step S410, the state is updated. At step S420 the pending bit is cleared for that set. At step S430, it is determined whether the data access request relates to a read or a write. If it is determined that the data access is a write then processing proceeds to step S440 where the data is written to the off-chip data RAM 35. If the data access request is a read then, at step S450, the data is read from the off-chip data RAM 35 and returned.

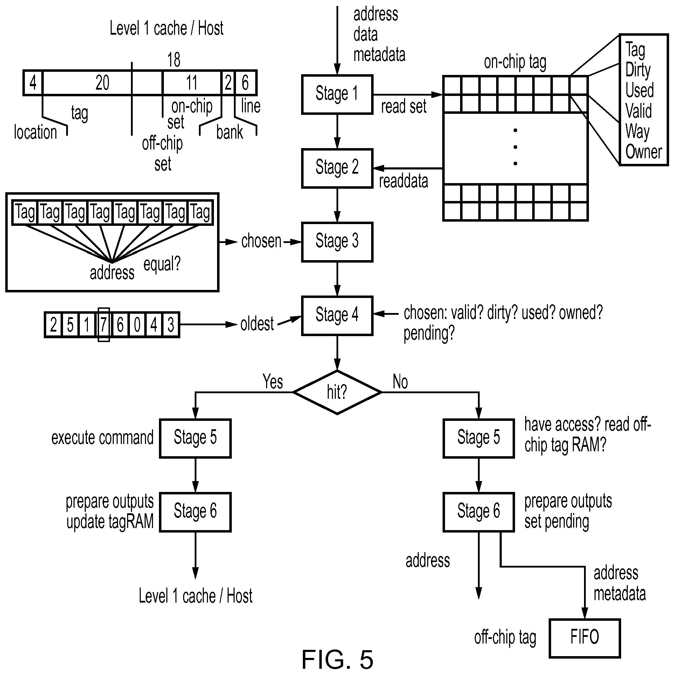

Figure 5 illustrates the pipeline processing of the cache logic 39. In the first iteration, stage 1 receives the address, data and any metadata of the access request. Stage 1 then reads the appropriate set from the on-chip tag RAM 37. Stage 2 then receives the read data. At stage 3, assessment is made of whether the retrieved tags match the address provided. At stage 4, the oldest entry is determined and a determination is made of whether the chosen address is valid, dirty, used, owned or whether that set has a pending bit set. An assessment is then made of whether a hit has occurred or not. If a hit has occurred then, at stage 5, the command is executed and at stage 6 the outputs are prepared and the on-chip tag RAM 37 is updated. If it is determined that a miss has occurred then, at stage 5, a determination is made of whether it is possible to have access and to read the off-chip tag RAM 33. At stage 6 the outputs are prepared, the pending bit is set and the address is provided to the off-chip tag RAM 33 and to a FIFO buffer.

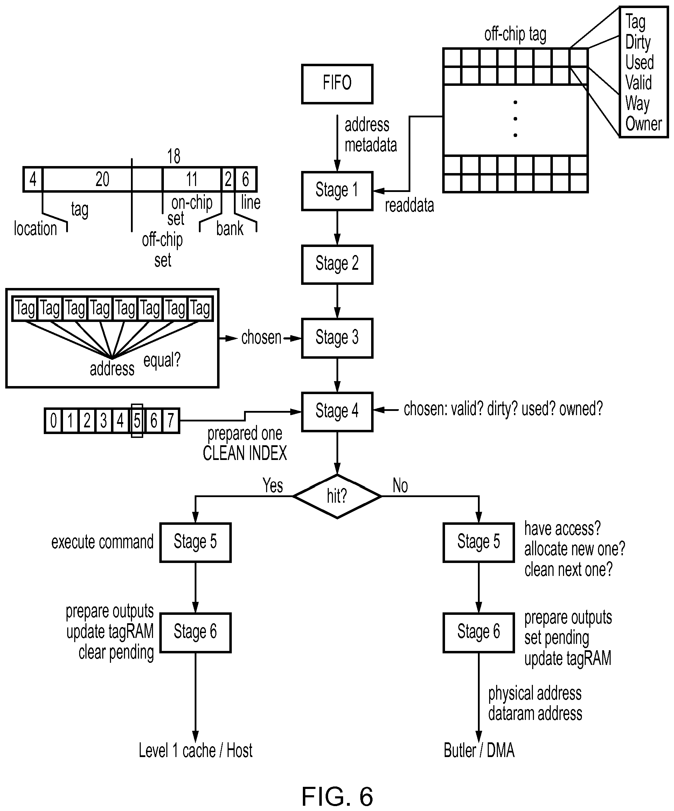

Figure 6 illustrates the further operation of the pipelined cache logic 39. In this second iteration, stage 1 receives the address, data and any metadata of the access request. Stage 1 receives the address and the read data from the off-chip tag RAM 33. Stage 2 is null because the data has already been read, and at stage 3, assessment is made of whether the retrieved tags match the address provided. At stage 4, the entry pointed to by the clean index is determined and a determination is made of whether the chosen address is valid, dirty, used or owned. An assessment is then made of whether a hit has occurred or not. If a hit has occurred then, at stage 5, the command is executed and at stage 6 the outputs are prepared and the off-chip tag RAM 33 is updated and the pending bit is cleared. If it is determined that a miss has occurred then, at stage 5, a determination is made of whether it is possible to have access, to allocate the new one and to clean the next one. At stage 6 the outputs are prepared, the pending bit is set, the off-chip tag RAM 33 is updated and the address is provided to the storage 40.

Embodiments provide a performance booster for big caches, allowing them to use a bigger and cheaper RAM without a big decrease in the hit rate due to stalls. This is achieved by introducing a cache of tags on-chip that is able to serve hits to most requests while storing only a sub-set of the total amount of tags. To hide latency, embodiments also implement a request buffer that avoids cache stalls when missing.

In embodiments, the external, large and slower RAM is referred to as an off-chip RAM. The internal, small and faster RAM is referred to as an on-chip RAM. The cache will differentiate between two types of command, removable or irremovable, depending if the data can be removed from the on-chip RAM or not while in use. The sets on the off-chip RAM are banded together in groups. The size of this groups is based on the ratio off-chip RAM/ on-chip RAM. The association is made by using modulo by this ratio on the off-chip set. Every one of the groups is associated to an on-chip set. Any command reaching the cache for the first time will evaluated against the data stored on the on-chip RAM. This first evaluation is called a first iteration. If it misses, then the command will be stored and the off-chip RAM read. When the answer from the off-chip RAM is received the command will be restored and evaluated against it. This second evaluation is called second iteration. On the off-chip RAM, a round-robin algorithm will be used for selecting the way that must be evicted. On the on-chip RAM, a least-recently-used algorithm will be used for selecting the way that must be evicted among all the removable tags. On the off-chip RAM, along with the tags, an index is stored which is a logarithm of 2 of the number of ways on the off-chip tag RAM, and will be referred as the clean_index. This clean index will always point to the way on that set that is ready to be replaced. In the case that the cache is using a write-back scheme, the way pointed by the clean_index must be kept clean. If a write request modified that way, then the clean_index must be increased and the next way written back. On the on-chip RAM, along with every tag, a field will be attached to identify the off-chip set to which the on-chip set belongs. This field will be referred as addr_high. On the on-chip RAM, along to every tag, a flag will be attached to mark if that way corresponds to the off-chip way pointed by the clean index. This field will be referred as is_clean. On the on-chip RAM, along to every tag, a flag will be attached to mark if that tag is removable or not. This field will be referred as removable. Any way from any off-chip set belonging to a group is eligible to be copied to the associated on-chip set. Any reading or writing to the off-chip RAM will have a variable and non-deterministic delay. However the order of execution will be fixed, and equal to the order of requesting. The on-chip RAM will be write-through, meaning that any modification to the on-chip RAM will be written to the off-chip RAM. On the on-chip RAM there will be a pending flag for every set. If a set has the pending flag set, any command to that set will be stalled, except if it is a write to an irremovable tag. Any command that needs to modify the data in the off-chip RAM must set the pending bit on the corresponding on-chip set, and clear the bit when the modifications are done. If all the ways in an on-chip set are contain irremovable tags in use, then a petition will be sent to cease the usage. This design allows a high increase of the total performance with only a small increase in size, since most requests will hit on the first iteration. Even when the request will need a second iteration, the cache will continue serving requests, thus hiding the latency from the external RAM.

A simple embodiment assumes a two-way associative cache, with 8 sets off-chip, and 4 sets on-chip. In a first example operation, a read request comes to address 4 to the cache. The request is evaluated against set 0 on the first iteration and hits. The data is retrieved using the tag stored on-chip, along with the addr_high field. In a second example operation, a read request comes to address 4 to the cache. The request is evaluated against set 0 on the first iteration and misses. It is stored along the oldest way on the on-chip RAM, set 4 is requested from off-chip RAM, and the cache continues working. It may hit: when the off-chip set comes, the request is recovered and evaluated, hitting on way 1. Then the information on way 1 of the off-chip set 4 is stored on the oldest way on on-chip set 0, along with addr_high 1. It may miss: when the off-chip set comes, the request is recovered and evaluated, missing of the second iteration. The data is requested from the storage, and the pending bit is set for on-chip set 0. The missing tag is stored on off-chip set 4, on the way pointed by the clean_index. The clean_index is increased. If the cache is write-back, the dirty bit of the way pointed by the increased clean_index is checked. If it is dirty it must be written back. The tag is also stored on on-chip set 0, on the way pointed by the oldest way, calculated on the first iteration, along with addr_high 1. If the cache is write-back, and the dirty bit of the way pointed by the increased clean_index is set and that way is on-chip RAM, its is_clean flag must be set. In a third example, a write request comes to address 4 to the cache. The request is evaluated against set 0 on the first iteration and hits, but the hitting way has the is_clean flag set. It is considered as a miss, and a second iteration triggered. The request will hit on the second iteration. The data will be written to the cache. The clean_index will be increased. If the cache is write-back, the dirty bit of the way pointed by the increased clean_index is checked. If it is dirty it must be written back.

Although illustrative embodiments of the invention have been disclosed in detail herein, with reference to the accompanying drawings, it is understood that the invention is not limited to the precise embodiment and that various changes and modifications can be effected therein by one skilled in the art without departing from the scope of the invention as defined by the appended claims ..dgbsdbs

## Claims

1. A level-'n' cache (30) method, comprising:
in response to a data access request identifying an address of a data block to be accessed, interrogating (S20) an address cache (37) of the level-'n' cache arranged to store address portions (Ton) for a sub-set of data blocks stored in a main cache (35) of the level-'n' cache to determine whether a cache hit occurs within said address cache for said address, wherein each entry in said address cache and said main cache has an owner indication which indicates an owner for that entry and comprising setting said owner indication when said data access request is an exclusive read.

2. The method of claim 1, comprising at least one of:
when a cache hit occurs within said address cache, accessing (S18O; S190) said data block within said main cache using an indication from said address cache of a set and a way within said main cache where said data block can be accessed;
when a cache miss occurs within said address cache, interrogating (S60) said main cache to determine whether a cache hit occurs within said main cache for said address;
when a cache hit occurs within said main cache, updating an entry (37A) in said address cache to store an address portion associated with said data access request together with an indication of a set and a way within said main cache where said data block can be accessed; and
wherein entries within said address cache are grouped into groups of entries, each group of entries being allocatable to a corresponding group of sets, each entry within each group of entries being allocatable for any entry in any way within that group of sets and said updating comprises replacing an entry in said address cache within a group of entries for a set associated with said data access request with said address portion together with said indication of said set and said way within said main cache.

3. The method of any preceding claim, comprising when a cache hit occurs within said address cache, setting (S90) a pending indicator for that group of entries containing the hit entry until said data access request has been resolved.

4. The method of claim 3, comprising deferring (S110) any access requests made to a group when the pending bit is set for that group.

5. The method of claim 3 or 4, comprising disregarding said pending bit when said data access request is from a high-priority owner.

6. The method of any preceding claim, comprising when a cache miss occurs within said main cache, obtaining (S330) said data block from a higher-level memory and when said data block has been obtained, replacing an entry in said main cache within a group of entries for a set associated with said data access request, said entry being indicated by a clean index for that group of entries, storing said address portion within said entry and storing said data block at a location associated with that entry in said main cache.

7. The method of claim 6, comprising changing (S290) said clean index to point to a different entry within said group of entries and, when said different entry is marked as dirty, performing a write-back for that entry.

8. The method of claim 7, comprising when said write-back has completed, marking said different entry as clean in said main cache and setting an is_clean indication associated with said entry within said address cache storing said address portion of said data access request.

9. The method of any preceding claim, comprising when a cache hit occurs within said address cache, said data access request is a write request and said is_clean indication associated with said entry within said address cache storing said address portion of said data access request is set, reporting a cache miss within said address cache, changing said clean index in said main cache to point to a different entry within said group of entries and when said different entry is marked as dirty, performing a write-back for that entry.

10. The method of claim 9, comprising when said write-back has completed, marking said different entry as clean in said main cache and setting an is_clean indication associated with an entry within said address cache storing an address portion for that entry.

11. The method of claim 10, comprising reporting a cache hit within said main cache and setting an is_clean indication associated with said entry within said address cache storing said address portion of said data access request.

12. The method of claim 1, comprising when every entry within a group of entries within said address cache has their owner indication set, selecting one of said entries to be invalidated.

13. The method of claim 1 or 12, comprising when a cache hit occurs within said address cache for an entry where said owner indication is set, deferring (S110) said access request for access requests from other than said owner.

14. A level-'n' cache (30), comprising:
a main cache (35);
an address cache (37) operable to store address portions (Ton) for a sub-set of data blocks stored in said main cache; and
control logic (39) operable, in response to a data access request identifying an address of a data block to be accessed, to interrogate said address cache to determine whether a cache hit occurs within said address cache for said address, the control logic being further **characterized in that** each entry in the address cache and the main cache has an owner indication which indicates an owner for that entry and the control logic is operable to set the owner indication when the data access request is an exclusive read.

15. A computer program product operable, when executed on a computer, to perform the method of any one of claims 1 to 13.

## Patentansprüche

1. Ebene-'n'-Cache-(30)-Verfahren, umfassend:
als Reaktion auf eine Datenzugriffsanfrage, die eine Adresse eines Datenblocks identifiziert, auf den zugegriffen werden soll, Abfragen (S20) eines Adress-Cache (37) des Ebene-'n'-Cache, der eingerichtet ist, um Adressabschnitte (Ton) für eine Teilmenge von Datenblöcken zu speichern, die in einem Haupt-Cache (35) des Ebene-'n'-Cache gespeichert sind, um zu bestimmen, ob ein Cache-Treffer innerhalb des Adress-Cache für die Adresse auftritt, wobei jeder Eintrag in dem Adress-Cache und dem Haupt-Cache eine Eigentümerangabe aufweist, die einen Eigentümer für diesen Eintrag angibt, und umfassend Einstellen der Eigentümerangabe, wenn die Datenzugriffsanfrage ein exklusives Lesen ist.

2. Verfahren nach Anspruch 1, umfassend mindestens eines von:
wenn ein Cache-Treffer innerhalb des Adress-Cache auftritt, Zugreifen (S180; S190) auf den Datenblock innerhalb des Haupt-Cache unter Verwendung einer Angabe aus dem Adress-Cache eines Satzes und eines Weges innerhalb des Haupt-Cache, wo auf den Datenblock zugegriffen werden kann;
wenn ein Cache-Fehler innerhalb des Adress-Cache auftritt, Abfragen (S60) des Haupt-Cache, um zu bestimmen, ob ein Cache-Treffer innerhalb des Haupt-Cache für die Adresse auftritt;
wenn ein Cache-Treffer innerhalb des Haupt-Cache auftritt, Aktualisieren eines Eintrags (37A) in dem Adress-Cache, um einen mit der Datenzugriffsanfrage verbundenen Adressabschnitt zusammen mit einer Angabe eines Satzes und eines Weges innerhalb des Haupt-Cache, wo auf den Datenblock zugegriffen werden kann, zu speichern; und
wobei Einträge innerhalb des Adress-Cache in Gruppen von Einträgen gruppiert werden, wobei jede Gruppe von Einträgen einer entsprechenden Gruppe von Sätzen zugeordnet werden kann, wobei jeder Eintrag innerhalb jeder Gruppe von Einträgen für einen Eintrag in einem Weg innerhalb dieser Gruppe von Sätzen zugeordnet werden kann und das Aktualisieren das Ersetzen eines Eintrags in dem Adress-Cache innerhalb einer Gruppe von Einträgen für einen mit der Datenzugriffsanfrage verbundenen Satz mit dem Adressabschnitt zusammen mit der Angabe des Satzes und des Weges innerhalb des Haupt-Cache umfasst.

3. Verfahren nach einem vorstehenden Anspruch, umfassend, wenn ein Cache-Treffer innerhalb des Adress-Cache auftritt, Einstellen (S90) einer ausstehenden Angabe für diese Gruppe von Einträgen, die den Treffereintrag enthält, bis die Datenzugriffsanfrage geklärt wurde.

4. Verfahren nach Anspruch 3, umfassend Verschieben (S110) von Zugriffsanfragen an eine Gruppe, wenn das ausstehende Bit für diese Gruppe eingestellt wird.

5. Verfahren nach Anspruch 3 oder 4, umfassend Missachten des ausstehenden Bits, wenn die Datenzugriffsanfrage von einem Eigentümer mit hoher Priorität stammt.

6. Verfahren nach einem vorstehenden Anspruch, umfassend, wenn ein Cache-Fehler innerhalb des Haupt-Cache auftritt, Erhalten (S330) des Datenblocks von einem Speicher höherer Ebene, und wenn der Datenblock erhalten wurde, Ersetzen eines Eintrags in dem Haupt-Cache innerhalb einer Gruppe von Einträgen für einen mit der Datenzugriffsanfrage verbundenen Satz, wobei der Eintrag durch einen sauberen Index für diese Gruppe von Einträgen angegeben wird, Speichern des Adressabschnitts innerhalb des Eintrags und Speichern des Datenblocks an einem Ort, der mit diesem Eintrag in dem Haupt-Cache verbunden ist.

7. Verfahren nach Anspruch 6, umfassend Ändern (S290) des sauberen Index, um auf einen anderen Eintrag innerhalb der Gruppe von Einträgen zu zeigen, und, wenn der andere Eintrag als schmutzig markiert wird, Durchführen einer Rück-schreibung für diesen Eintrag.

8. Verfahren nach Anspruch 7, umfassend, wenn die Rückschreibung abgeschlossen ist, Markieren des anderen Eintrags als sauber in dem Haupt-Cache und Einstellen einer mit dem Eintrag verbundenen ist_sauber-Angabe innerhalb des Adress-Cache, der den Adressabschnitt der Datenzugriffsanfrage speichert.

9. Verfahren nach einem vorstehenden Anspruch, umfassend, wenn ein Cache-Treffer innerhalb des Adress-Cache auftritt, die Datenzugriffsanfrage eine Schreibanfrage ist und die ist_sauber-Angabe, die mit dem Eintrag innerhalb des Adress-Cache verbunden ist, der den Adressabschnitt der Datenzugriffsanfrage speichert, eingestellt ist, Melden eines Cache-Fehlers innerhalb des Adress-Cache, Ändern des sauberen Index in dem Haupt-Cache, um auf einen anderen Eintrag innerhalb der Gruppe von Einträgen zu zeigen, und wenn der andere Eintrag als schmutzig markiert ist, Durchführen einer Rückschreibung für diesen Eintrag.

10. Verfahren nach Anspruch 9, umfassend, wenn die Rückschreibung abgeschlossen ist, Markieren des anderen Eintrags als sauber in dem Haupt-Cache und Einstellen einer ist_sauber-Angabe, die mit einem Eintrag innerhalb des Adress-Cache verbunden ist, der einen Adressabschnitt für diesen Eintrag speichert.

11. Verfahren nach Anspruch 10, umfassend Berichten eines Cache-Treffers innerhalb des Haupt-Cache und Einstellen einer mit dem Eintrag verbundenen ist_sauber-Angabe innerhalb des Adress-Cache, der den Adressabschnitt der Datenzugriffs-anfrage speichert.

12. Verfahren nach Anspruch 1, umfassend, wenn für jeden Eintrag innerhalb einer Gruppe von Einträgen innerhalb des Adress-Cache eine Eigentümerangabe eingestellt wurde, Auswählen eines der zu invalidierenden Einträge.

13. Verfahren nach Anspruch 1 oder 12, umfassend, wenn ein Cache-Treffer innerhalb des Adress-Cache für einen Eintrag auftritt, bei dem die Eigentümerangabe eingestellt wurde, Verschieben (S110) der Zugriffsanfrage für Zugriffsanfragen von anderen als diesem Eigentümer.

14. Ebene-'n'-Cache (30), umfassend:
einen Haupt-Cache (35);
einen Adress-Cache (37), der betreibbar ist, um Adressabschnitte (Ton) für eine Teilmenge von Datenblöcken, die in dem Haupt-Cache gespeichert sind, zu speichern; und
eine Steuerlogik (39), die betreibbar ist, um als Reaktion auf eine Datenzugriffsanfrage, die eine Adresse eines Datenblocks identifiziert, auf den zugegriffen werden soll, den Adress-Cache abzufragen, um zu bestimmen, ob ein Cache-Treffer innerhalb des Adress-Cache für die Adresse auftritt, wobei die Steuerlogik weiter **dadurch gekennzeichnet ist, dass** jeder Eintrag in dem Adress-Cache und dem Haupt-Cache eine Eigentümerangebe aufweist, die einen Eigentümer für diesen Eintrag angibt, und die Steuerlogik betreibbar ist, um die Eigentümerangabe einzustellen, wenn die Datenzugriffsanfrage ein exklusives Lesen ist.

15. Computerprogrammprodukt, das betreibbar ist, um, wenn es auf einem Computer ausgeführt wird, das Verfahren nach einem der Ansprüche 1 bis 13 durchzuführen.

## Revendications

1. Procédé de cache de niveau 'n' (30), comprenant :
en réponse à une demande d'accès aux données identifiant une adresse d'un bloc de données devant faire l'objet d'un accès, l'interrogation (S20) d'un cache d'adresse (37) du cache de niveau 'n' agencé pour stocker des parties d'adresse (Ton) pour un sous-ensemble de blocs de données stockés dans un cache principal (35) du cache de niveau 'n' pour déterminer si un succès de cache se produit à l'intérieur dudit cache d'adresse pour ladite adresse, dans lequel chaque entrée dans ledit cache d'adresse et ledit cache principal a une indication de possesseur qui indique un possesseur pour cette entrée et comprenant l'établissement de ladite indication de possesseur lorsque ladite demande d'accès aux données est une lecture exclusive.

2. Procédé selon la revendication 1, comprenant au moins l'un parmi :
lorsqu'un succès de cache se produit à l'intérieur dudit cache d'adresse, l'accès (S180 ; 5190) audit bloc de données à l'intérieur dudit cache principal en utilisant une indication en provenance dudit cache d'adresse d'un ensemble et d'une voie à l'intérieur dudit cache principal où ledit bloc de données peut faire l'objet d'un accès ;
lorsqu'un défaut de cache se produit à l'intérieur dudit cache d'adresse, l'interrogation (S60) dudit cache principal pour déterminer si un succès de cache se produit à l'intérieur dudit cache principal pour ladite adresse ;
lorsqu'un succès de cache se produit à l'intérieur dudit cache principal, la mise à jour d'une entrée (37A) dans ledit cache d'adresse pour stocker une partie d'adresse associée à ladite demande d'accès aux données conjointement avec une indication d'un ensemble et d'une voie à l'intérieur dudit cache principal où ledit bloc de données peut faire l'objet d'un accès ; et
dans lequel des entrées à l'intérieur dudit cache d'adresse sont regroupées en groupes d'entrées, chaque groupe d'entrées étant allouable à un groupe d'ensembles correspondant, chaque entrée à l'intérieur de chaque groupe d'entrées étant allouable pour toute entrée dans toute voie à l'intérieur de ce groupe d'ensembles et ladite mise à jour comprend le remplacement d'une entrée dans ledit cache d'adresse à l'intérieur d'un groupe d'entrées pour un ensemble associé à ladite demande d'accès aux données par ladite partie d'adresse conjointement avec ladite indication dudit ensemble et de ladite voie à l'intérieur dudit cache principal.

3. Procédé selon l'une quelconque des revendications précédentes, comprenant, lorsqu'un succès de cache se produit à l'intérieur dudit cache d'adresse, l'établissement (S90) d'un indicateur en attente pour ce groupe d'entrées contenant l'entrée de succès jusqu'à ce que ladite demande d'accès aux données ait été résolue.

4. Procédé selon la revendication 3, comprenant le fait de différer (S110) toutes demandes d'accès faites à un groupe lorsque le bit en attente est établi pour ce groupe.

5. Procédé selon la revendication 3 ou 4, comprenant le fait de ne pas tenir compte dudit bit en attente lorsque ladite demande d'accès aux données provient d'un possesseur de priorité élevée.

6. Procédé selon l'une quelconque des revendications précédentes, comprenant, lorsqu'un défaut de cache se produit à l'intérieur dudit cache principal, l'obtention (S330) dudit bloc de données à partir d'une mémoire de niveau supérieur et lorsque ledit bloc de données a été obtenu, le remplacement d'une entrée dans ledit cache principal à l'intérieur d'un groupe d'entrées pour un ensemble associé à ladite demande d'accès aux données, ladite entrée étant indiquée par un index clean pour ce groupe d'entrées, le stockage de ladite partie d'adresse à l'intérieur de ladite entrée et le stockage dudit bloc de données à un emplacement associé à cette entrée dans ledit cache principal.

7. Procédé selon la revendication 6, comprenant le changement (S290) dudit index clean pour pointer vers une entrée différente à l'intérieur dudit groupe d'entrées et, lorsque ladite entrée différente est marquée comme dirty, la réalisation d'une réécriture pour cette entrée.

8. Procédé selon la revendication 7, comprenant, lorsque ladite réécriture s'est terminée, le marquage de ladite entrée différente comme clean dans ledit cache principal et l'établissement d'une indication is_clean associée à ladite entrée à l'intérieur dudit cache d'adresse stockant ladite partie d'adresse de ladite demande d'accès aux données.

9. Procédé selon l'une quelconque des revendications précédentes, comprenant, lorsqu'un succès de cache se produit à l'intérieur dudit cache d'adresse, ladite demande d'accès aux données est une demande d'écriture et ladite indication is_clean associée à ladite entrée à l'intérieur dudit cache d'adresse stockant ladite partie d'adresse de ladite demande d'accès aux données est établie, le rapport d'un défaut de cache à l'intérieur dudit cache d'adresse, le changement dudit index clean dans ledit cache principal pour pointer vers une entrée différente à l'intérieur dudit groupe d'entrées et lorsque ladite entrée différente est marquée comme dirty, la réalisation d'une réécriture pour cette entrée.

10. Procédé selon la revendication 9, comprenant, lorsque ladite réécriture s'est terminée, le marquage de ladite entrée différente comme clean dans ledit cache principal et l'établissement d'une indication is_clean associée à une entrée à l'intérieur dudit cache d'adresse stockant une partie d'adresse pour cette entrée.

11. Procédé selon la revendication 10, comprenant le rapport d'un succès de cache à l'intérieur dudit cache principal et l'établissement d'une indication is_clean associée à ladite entrée à l'intérieur dudit cache d'adresse stockant ladite partie d'adresse de ladite demande d'accès aux données.

12. Procédé selon la revendication 1, comprenant, lorsque toutes les entrées à l'intérieur d'un groupe d'entrées à l'intérieur dudit cache d'adresse ont leur indication de possesseur établie, la sélection d'une desdites entrées pour être invalidée.

13. Procédé selon la revendication 1 ou 12, comprenant, lorsqu'un succès de cache se produit à l'intérieur dudit cache d'adresse pour une entrée où ladite indication de possesseur est établie, le fait de différer (S110) ladite demande d'accès pour des demandes d'accès en provenance d'un autre que ledit possesseur.

14. Cache de niveau 'n' (30), comprenant :
un cache principal (35) ;
un cache d'adresse (37) exploitable pour stocker des parties d'adresse (Ton) pour un sous-ensemble de blocs de données stockés dans ledit cache principal ; et
une logique de commande (39) exploitable, en réponse à une demande d'accès aux données identifiant une adresse d'un bloc de données devant faire l'objet d'un accès, pour interroger ledit cache d'adresse pour déterminer si un succès de cache se produit à l'intérieur dudit cache d'adresse pour ladite adresse, la logique de commande étant en outre **caractérisée en ce que** chaque entrée dans le cache d'adresse et le cache principal a une indication de possesseur qui indique un possesseur pour cette entrée et la logique de commande est exploitable pour établir l'indication de possesseur lorsque la demande d'accès aux données est une lecture exclusive.

15. Produit de programme informatique exploitable, lorsqu'il est exécuté sur un ordinateur, pour réaliser le procédé selon l'une quelconque des revendications 1 à 13.
